# EUROPÄISCHE PATENTSCHRIFT

(11) **EP 3 286 804 B1**
(45) Veröffentlichungstag und Bekanntmachung des Hinweises auf die Patenterteilung: **26.06.2019**
(21) Anmeldenummer: 16717374.9
(22) Anmeldetag: 20.04.2016
(51) Int. Cl.: H01R 12/58, H01R 13/66, H01R 13/713, H01R 13/20, B60L 3/04, B60L 53/16, B60L 3/00

(54) **STECKVERBINDERTEIL MIT EINER TEMPERATURÜBERWACHUNGSEINRICHTUNG**
PLUG CONNECTOR PART HAVING A TEMPERATURE-MONITORING DEVICE
ÉLÉMENT DE CONNECTEUR ENFICHABLE COMPORTANT UN MOYEN DE SURVEILLANCE DE TEMPERATURE

(30) Priorität: 23.04.2015 DE 102015106251
(43) Veröffentlichungstag der Anmeldung: 28.02.2018
(73) Patentinhaber: Phoenix Contact e-Mobility GmbH, 32816 Schieder-Schwalenberg (DE)
(72) Erfinder: ROSE, Markus, 33102 Paderborn (DE); FÜHRER, Thomas, 32825 Blomberg (DE)
(74) Vertreter: Janke, Christiane
(86) Internationale Anmeldenummer: PCT/EP2016/058682
(87) Internationale Veröffentlichungsnummer: WO 2016/169940

(56) Entgegenhaltungen:
- WO-A1-2014/188130
- GB-A- 2 489 988
- US-A1- 2006 094 289

## Beschreibung

Die Erfindung betrifft ein Steckverbinderteil zum Verbinden mit einem Gegensteckverbinderteil nach dem Oberbegriff des Anspruchs 1.

Ein derartiges Steckverbinderteil umfasst ein Gehäuseteil, mindestens ein an dem Gehäuseteil angeordnetes, elektrisches Kontaktelement zum Herstellen eines elektrischen Kontakts mit dem Gegensteckverbinderteil und eine Temperaturüberwachungseinrichtung mit mindestens einer Sensoreinrichtung zum Detektieren einer Erwärmung an dem mindestens einen Kontaktelement, wobei die Temperaturüberwachungseinrichtung ein flächig entlang einer Ebene erstrecktes Trägerelement mit mindestens einer Öffnung und einer an der mindestens einen Öffnung angeordnete Kontaktfläche aufweist, wobei das mindestens eine Kontaktelement sich derart durch die mindestens eine Öffnung hindurch erstreckt, dass das mindestens eine Kontaktelement mit der Kontaktfläche in Anlage ist, und die mindestens eine Sensoreinrichtung an dem Trägerelement zur Detektion einer Erwärmung an dem mindestens einen Kontaktelement angeordnet ist.

Bei einem solchen Steckverbinderteil kann es sich um einen Stecker oder auch eine Buchse handeln. Ein solches Steckverbinderteil kann insbesondere an einer Ladeeinrichtung zum Übertragen eines Ladestroms zum Einsatz kommen. Das Steckverbinderteil kann insbesondere als Ladestecker oder Ladebuchse zum Laden eines elektromotorisch angetriebenen Kraftfahrzeugs (bezeichnet auch als Elektrofahrzeug) ausgebildet sein.

Ladestecker oder Ladebuchsen zum Laden von Elektrofahrzeugen sind so auszulegen, dass große Ladeströme übertragen werden können. Weil die thermische Verlustleistung quadratisch mit dem Ladestrom wächst, ist bei solchen Ladesteckern oder Ladebuchsen erforderlich, eine Temperaturüberwachung bereitzustellen, um eine Überhitzung an Bauteilen des Ladesteckers oder der Ladebuchse frühzeitig zu erkennen und gegebenenfalls eine Modifizierung des Ladestroms oder gar eine Abschaltung der Ladeeinrichtung zu bewirken.

Bei einem aus der EP 2 605 339 A1 bekannten Ladestecker ist ein Temperatursensor an einem Isolierkörper in etwa mittig zwischen Kontaktelementen des Kontaktsteckers angeordnet. Über den Temperatursensor kann erkannt werden, ob irgendwo an den Kontaktelementen es zu einer übermäßigen Erhitzung kommt, um gegebenenfalls ein Abschalten des Ladevorgangs zu bewirken.

Bei einem aus der GB 2 489 988 A bekannten Ladestecker sind mehrere Temperatursensoren vorgesehen, die über eine Leitung Temperaturdaten übermitteln. Abhängig davon, in welchem Temperaturbereich sich die an den Temperatursensoren aufgenommenen Temperaturen befinden, erfolgt eine Regelung eines Ladevorgangs.

Aus der US 6,210,036 B1 ist ein Steckverbinder bekannt, bei dem mehrere Temperatursensoren über eine einadrige Leitung miteinander seriell verkettet sind. Die Temperatursensoren sind an einem Isolierkörper angeordnet und weisen bei einer vorbestimmten Temperatur eine signifikante Widerstandsänderung auf, die so groß ist, dass ein an die Leitung angeschlossener Steuerkreis die Änderung erfassen und den Stromfluss durch den Ladestecker anpassen, gegebenenfalls abschalten kann.

Aus der US 8,325,454 B2 ist ein Stecker bekannt, bei dem einzelnen Kontakten Thermistoren zugeordnet sind, die parallel miteinander verschaltet sind und bei Überschreiten einer Schwelltemperatur einen Thyristor leitend schalten, um auf diese Weise einen Stromfluss durch die Kontakte abzuschalten.

Aus der WO 2014/188130 A1 ist ein Steckverbinderteil bekannt, welches ein Trägerelement mit Öffnungen aufweist, durch welche sich die Kontaktelemente hindurcherstrecken. An diesem Trägerelement ist eine Sensoreinrichtung zum Detektieren einer Erwärmung der Kontaktelemente angeordnet.

Bei aus dem Stand der Technik bekannten Ladesteckern sind Temperatursensoren insbesondere in einen Isolierkörper eingebettet. Dies ist erforderlich, um die Temperatursensoren elektrisch von den Kontaktelementen, an denen es zu einer Erwärmung kommen kann, zu isolieren. Dies bringt aber gleichzeitig den Nachteil mit sich, dass eine Temperaturänderung an einem der Kontaktelemente über den Isolierkörper zeitlich verzögert übertragen wird und somit mit zeitlicher Verzögerung an den Temperatursensoren wahrgenommen wird. Insbesondere bei Konzepten, die eine Schnellabschaltung eines Lastkreises im Fehlerfall ermöglichen sollen, sind derartige Anordnungen von Temperatursensoren daher unter Umständen ungeeignet.

Es besteht ein Bedürfnis nach einer Temperaturüberwachungseinrichtung, die einfach und kostengünstig aufgebaut sein kann und eine Temperaturüberwachung an den Kontaktelementen mit einem schnellen Ansprechverhalten für ein zügiges Einleiten von Gegenmaßnahmen, beispielsweise eine Schnellabschaltung eines Ladestroms, ermöglicht. Wünschenswert ist dabei auch eine einfache Auswertbarkeit von Signalen einer solchen Temperaturüberwachungseinrichtung, um in kostengünstiger und dennoch zuverlässiger Weise eine Überhitzung an einem oder an mehreren Kontaktelementen des Steckverbinderteils zu erkennen.

Aufgabe der vorliegenden Erfindung ist es, ein Steckverbinderteil bereitzustellen, das auf einfache und kostengünstige Weise eine Temperaturüberwachung mit schnellem Ansprechverhalten und einfachem Aufbau ermöglicht.

Diese Aufgabe wird durch einen Gegenstand mit den Merkmalen des Anspruchs 1 gelöst.

Demnach ist ein metallischer Kopplungsabschnitt mit der Kontaktfläche verbunden und erstreckt sich ausgehend von der Kontaktfläche in dem Trägerelement, wobei der Kopplungsabschnitt sich ausgehend von der Kontaktfläche parallel zur Ebene im Inneren des Trägerelements erstreckt, und wobei die mindestens eine Sensoreinrichtung an einer flächig entlang der Ebene erstreckten Seite des Trägerelements angeordnet und von dem Kopplungsabschnitt elektrisch isoliert ist, wobei der Kopplungsabschnitt, betrachtet in eine Richtung senkrecht zu der Ebene des Trägerelements, unterhalb der mindestens einen Sensoreinrichtung im Inneren des Trägerelements angeordnet ist.

Das Trägerelement kann beispielsweise als Leiterplatte ausgebildet sein, die auf einem aus einem elektrisch isolierenden Material bestehenden Trägerkörper elektrische Leiterbahnen trägt.

Dadurch, dass das mindestens eine Kontaktelement sich durch eine Öffnung des Trägerelements hindurch erstreckt und in kontaktierender Anlage mit der Kontaktfläche der Öffnung ist, ist das mindestens eine Kontaktelement mit der insbesondere metallischen Kontaktfläche kontaktiert. Über die Kontaktfläche ist das Trägerelement somit thermisch mit dem mindestens einen Kontaktelement gekoppelt, sodass die an dem Trägerelement angeordnete mindestens eine Sensoreinrichtung über die Kontaktfläche eine Erwärmung an einem Kontaktelement detektieren kann.

Weil eine Sensoreinrichtung somit räumlich nahe an einem zugeordneten Kontaktelement angeordnet sein kann, kann die Sensoreinrichtung eine Erwärmung an dem Kontaktelement ohne große zeitliche Latenz, also mit zügigem Ansprechverhalten detektieren, sodass die Information über die Erwärmung zügig ausgewertet werden kann, um eine geeignete Gegenmaßnahme, beispielsweise eine Abschaltung eines übertragenen Ladestroms, einzuleiten.

Vorteilhafterweise sind, wenn mehrere elektrische Kontaktelemente vorhanden sind, auch mehrere Öffnungen in dem Trägerelement ausgebildet, wobei jedem Kontaktelement eine Öffnung zugeordnet ist und sich somit jedes Kontaktelement durch eine Öffnung des Trägerelements hindurch erstreckt. An jeder Öffnung ist hierbei eine beispielsweise metallische Kontaktfläche angeordnet, sodass jedes Kontaktelement thermisch mit der Kontaktfläche gekoppelt ist. Auf diese Weise kann an jedem Kontaktelement über die Kontaktfläche mittels eines oder mehrerer Sensoreinrichtungen eine Erwärmung detektiert werden.

Denkbar und möglich ist in diesem Zusammenhang aber auch, dass nur solche Kontaktelemente, die im Betrieb große Ströme, beispielsweise große Ladeströme, führen, thermisch überwacht werden. Entsprechend kann nur an solchen Öffnungen des Trägerelements, durch die sich ein zu überwachendes, im Betrieb thermisch belastetes Kontaktelement hindurch erstreckt, eine (metallische) Kontaktfläche vorgesehen sein.

Das eine oder die mehreren Kontaktelemente erstrecken sich vorteilhafterweise senkrecht durch das Trägerelement hindurch. Das Trägerelement erstreckt sich flächig in der ihm zugeordneten Ebene, während die Kontaktelementen senkrecht zu dieser Ebene stehen.

Die Kontaktelemente können beispielsweise durch metallische Zylinderstifte verwirklicht sein, die sich senkrecht durch die im Trägerelement vorgesehenen Öffnungen hindurch erstrecken. Entsprechend können die Öffnungen in dem Trägerelement kreiszylindrisch ausgebildet und von metallischen Kontaktflächen umgeben sein.

Die Kontaktflächen sind vorteilhafterweise nach Art von Durchkontaktierungen an den Öffnungen des Trägerelements ausgebildet. Eine Mantelfläche in Form einer vorzugsweise metallischen Schicht bedeckt den inneren Rand einer Öffnung und erstreckt sich hierbei von einer ersten Seite des Trägerelements durch die Öffnung hindurch zur gegenüberliegenden, zweiten Seite des flächigen Trägerelements. Das Trägerelement selbst ist hierbei vorzugsweise aus einem elektrisch isolierenden Material, beispielsweise einem Kunststoffmaterial, insbesondere einem üblichen Leiterplattenmaterial wie FR 4, ausgebildet.

Die Mantelfläche bedeckt den inneren Rand der Öffnung. An die Mantelfläche kann, außerhalb der Öffnung, an einer Seite oder an beiden Seiten des Trägerelements ein (metallischer) Kontaktierungsring anschließen, der um die Öffnung umläuft und sich ringförmig an der Oberfläche des Trägerelements erstreckt.

Ein solcher metallischer Kontaktierungsring an einer oder an beiden Seiten des Trägerelements kann zur vorteilhaften thermischen Kopplung eines zugeordneten Kontaktelements mit dem Trägerelement dienen. So liegt ein einer Öffnung zugeordnetes Kontaktelement vorteilhafterweise mit einem Schaftabschnitt in der zugeordneten Öffnung ein und ist klemmend mit dem Trägerelement verbunden, indem beispielsweise einerseits des Trägerelements ein radial von dem Schaftabschnitt vorstehender Bund des Kontaktelements und andererseits des Trägerelements ein auf den Schaftabschnitt aufgeschraubtes Schraubelement nach Art einer Mutter zu liegen kommen, sodass das Trägerelement klemmend zwischen dem Bund einerseits und dem Schraubelement andererseits aufgenommen ist. Der Bund liegt hierbei vorteilhafterweise an einem Kontaktierungsring einerseits des Trägerelements und das Schraubelement an einem Kontaktierungsring andererseits des Trägerelements an, sodass über den Bund einerseits und das Schraubelement andererseits eine vorteilhafte Kontaktierung zur thermischen Kopplung des Kontaktelements mit dem Trägerelement an der zugeordneten Öffnung hergestellt wird.

Denkbar ist in diesem Zusammenhang alternativ auch, dass die Kontaktfläche keine Mantelfläche aufweist, sondern (nur) durch einen Kontaktierungsring an einer Seite oder durch zwei Kontaktierungsringe an beiden Seiten des Trägerelements gebildet ist. Entfällt die Mantelfläche, kann zur mechanischen Entkopplung des Kontaktelements innerhalb der Öffnung beispielsweise ein elektrisch isolierendes, aber thermisch leitfähiges Material eingesetzt werden (z.B. Wärmeleitsilikon).

An dem Trägerelement sind eine oder mehrere Sensoreinrichtungen angeordnet, die dazu dienen, eine Erwärmung an einem oder mehreren Kontaktelementen zu detektieren. Dadurch, dass ein Kontaktelement, das sich durch eine Öffnung des Trägerelements hindurch erstreckt, in Anlage mit der Kontaktfläche und/oder mit den beidseits des Trägerelements angeordneten Kontaktierungsringen ist, erwärmen sich bei einer Erwärmung des Kontaktelements auch die Mantelfläche und/oder die Kontaktierungsringe. Dies kann durch die an dem Trägerelement angeordnete Sensoreinrichtung erfasst werden, sodass ein geeignetes Sensorsignal beispielsweise an eine Steuereinrichtung des Steckverbinderteils oder einer mit dem Steckverbinderteil gekoppelten, übergeordneten Baugruppe beispielsweise eines Fahrzeugs oder einer Ladestation gesendet werden kann, um eine geeignete Gegenmaßnahme, beispielsweise ein Abschalten eines Ladestroms oder dergleichen, einleiten zu können.

Um ein günstiges Ansprechverhalten der Sensoreinrichtung zu erreichen, ist die Sensoreinrichtung in thermisch vorteilhaft gekoppelter Weise zu dem zugeordneten Kontaktelement anzuordnen. Dies kann grundsätzlich dadurch erreicht werden, dass die Sensoreinrichtung in räumlich enger Lagebeziehung zu dem Kontaktelement an dem Trägerelement angeordnet ist.

Ist aufgrund von beispielsweise Bauraumgegebenheiten eine Anordnung einer Sensoreinrichtung unmittelbar im Bereich eines Kontaktelements nicht möglich oder nicht gewünscht, so kann vorgesehen sein, eine thermische Kopplung des Kontaktelements mit der Sensoreinrichtung über einen zusätzlichen Kopplungsabschnitt herzustellen. Ein solcher metallischer Kopplungsabschnitt ist, erfindungsgemäß, mit der Kontaktfläche thermisch verbunden (z.B. durch mechanische Verbindung oder über geeignete thermische Vias) und erstreckt sich ausgehend von der Kontaktfläche in dem Trägerelement.

Ein solcher Kopplungsabschnitt kann beispielsweise auf einer Seite des Trägerelements nach Art einer metallischen Leiterbahn angeordnet sein und mit der Mantelfläche oder mit einem an die Mantelfläche anschließenden Kontaktierungsring der Kontaktfläche verbunden sein.

In anderer Ausgestaltung kann das Trägerelement aber auch mehrlagig, beispielsweise als mehrlagige Leiterplatte, ausgebildet sein. In diesem Fall kann der Kopplungsabschnitt beispielsweise in dem Trägerelement eingebettet sein, ist im Inneren des Trägerelements z.B. mit der Mantelfläche verbunden oder mit einem oder beiden der Kontaktierungsringe kontaktiert oder über thermische Vias thermisch verbunden und erstreckt sich ausgehend von der Öffnung parallel zur Ebene des Trägerelements in das Trägerelement hinein.

Im Betrieb des Steckverbinderteils erwärmt sich der metallische, mit der ebenfalls metallischen Kontaktfläche verbundene Kopplungsabschnitt zusammen mit dem mit der Kontaktfläche kontaktierten Kontaktelement. Die an dem Kontaktelement entstehende Wärme wird ohne (große) zeitliche Verzögerung somit auch auf den Kopplungsabschnitt übertragen. Ist die Sensoreinrichtung in räumlich enger Lagebeziehung zu dem Kopplungsabschnitt angeordnet, so kann die mit der Erwärmung des Kontaktelements korrespondierende Erwärmung des Kopplungsabschnitt mit günstigem Ansprechverhalten an der Sensoreinrichtung erfasst werden, um geeignete Sensorsignale hin zu einer übergeordneten Steuereinrichtung zu übertragen.

Die einer Öffnung zugeordnete Sensoreinrichtung ist an einer flächig entlang der Ebene erstreckten Seite des Trägerelements, also an der Oberfläche des Trägerelements, angeordnet. Hierbei ist die Sensoreinrichtung von dem Kopplungsabschnitt elektrisch isoliert, indem zwischen dem im Inneren des Trägerelements erstreckten Kopplungsabschnitt und der Sensoreinrichtung an der Oberfläche des Trägerelements eine Zwischenlage des Trägerelements aus einem elektrisch isolierenden Material vorgesehen ist. Diese Zwischenlage kann vergleichsweise dünn sein und beispielsweise eine Stärke von unter 1 mm, beispielsweise von einigen wenigen Zehntelmillimetern aufweisen. Grundsätzlich ist die Dicke dieser elektrisch isolierenden Zwischenlage so zu wählen, dass einerseits die Sensoreinrichtung eine Erwärmung an dem Kopplungsabschnitt mit günstigem Ansprechverhalten detektieren kann und andererseits die Zwischenlage hinreichend spannungsfest ist, um eine zuverlässige elektrische Isolierung zwischen dem Kopplungsabschnitt und der Sensoreinrichtung zu gewährleisten.

Grundsätzlich ist in diesem Zusammenhang auch denkbar und möglich, dass der Kopplungsabschnitt auf einer Seite des Trägerelements angeordnet ist, während die Sensoreinrichtung auf der gegenüberliegenden, anderen Seite des Trägerelements angeordnet ist. Durch Zwischenlage des elektrisch isolierenden Trägermaterials des Trägerelements ist somit eine elektrische Entkopplung der Sensoreinrichtung von dem Kopplungsabschnitt gewährleistet, wobei bei hinreichend dünnem Trägerelement zudem eine gute thermische Kopplung mit günstigem Ansprechverhalten der Sensoreinrichtung erreicht werden kann.

Der Kopplungsabschnitt ist vorzugsweise - im Vergleich zur Sensoreinrichtung - großflächig, sodass sich bei Erwärmung des Kontaktelements und damit einhergehender Erwärmung des Kopplungsabschnitts das Trägerelement im Bereich der Umgebung der Sensoreinrichtung erwärmt und somit eine gute thermische Ankopplung der Sensoreinrichtung an den Kopplungsabschnitt erreicht wird.

Der Kopplungsabschnitt ist hierbei, betrachtet in eine Richtung senkrecht zu der Ebene des Trägerelements, unterhalb der mindestens einen Sensoreinrichtung in oder an dem Trägerelement angeordnet. Die Sensoreinrichtung befindet sich somit in Gegenüberlage zu dem Kopplungsabschnitt, wobei die Sensoreinrichtung auf der Oberfläche des Trägerelements, der Kopplungsabschnitt hingegen im Inneren des Trägerelements oder auf der anderen Seite des Trägerelements angeordnet ist.

Grundsätzlich ist denkbar, dass die Temperaturüberwachungseinrichtung genauso viele Sensoreinrichtungen aufweist wie zu überwachende Kontaktelemente vorhanden sind. In diesem Fall ist jede Sensoreinrichtung genau einem Kontaktelement zugeordnet, sodass an jedem Kontaktelement gesondert durch eine Sensoreinrichtung eine Überwachung auf Erwärmung durchgeführt werden kann.

Alternativ ist auch möglich, mehrere Kontaktelemente durch eine gemeinsame Sensoreinrichtung zu überwachen. In diesem Fall ist beispielsweise einer Gruppe von Kontaktelementen eine gemeinsame Sensoreinrichtung zugeordnet, die somit qualitativ überwacht, ob an einem oder an mehreren Kontaktelementen der Gruppe von Kontaktelementen eine (unzulässige hohe) Erwärmung auftritt.

Sensoreinrichtungen der hier beschriebenen Art sind generell als Temperatursensoren beispielsweise in Form von temperaturabhängigen Widerständen ausgebildet. Bei solchen Temperatursensoren kann es sich beispielsweise um Widerstände mit einem positiven Temperaturkoeffizienten (sogenannte PTC-Widerstände) handeln, deren Widerstandswert mit steigender Temperatur ansteigt (auch bezeichnet als Kaltleiter, die bei niedriger Temperatur eine gute elektrische Leitfähigkeit und bei höheren Temperaturen eine reduzierte elektrische Leitfähigkeit aufweisen). Solche Temperatursensoren können beispielsweise auch eine nichtlineare Temperaturkennlinie aufweisen und können beispielsweise aus einem Keramikmaterial hergestellt sein (sogenannte Keramik-Kaltleiter).

Es können beispielsweise aber auch elektrische Widerstände mit negativem Temperaturkoeffizienten (sogenannte NTC-Widerstände) als Temperatursensoren zum Einsatz kommen, deren Widerstandswert mit steigender Temperatur sinkt.

Alternativ oder zusätzlich können auch durch Halbleiterbauelemente ausgebildete Temperatursensoren zum Einsatz kommen.

Der der Erfindung zugrunde liegende Gedanke soll nachfolgend anhand der in den Figuren dargestellten Ausführungsbeispiele näher erläutert werden. Es zeigen:
- Fig.1: eine schematische Darstellung eines Elektrofahrzeugs mit einem Ladekabel und einer Ladestation zum Aufladen;
- Fig. 2: eine perspektivische Ansicht eines Ausführungsbeispiels eines Steckverbinderteils;
- Fig. 3: eine Explosionsansicht des Steckverbinderteils;
- Fig. 4: eine perspektivische Ansicht einer Kontaktbaugruppe des Steckverbinderteils;
- Fig. 5: eine Ansicht der Kontaktbaugruppe, mit nur einem an einem Trägerelement angeordneten Kontaktelement;
- Fig. 6A, 6B: perspektivische Explosionsansichten der Anordnung gemäß Fig. 5;
- Fig. 7: eine gesonderte Ansicht des Trägerelements der Kontaktbaugruppe;
- Fig. 8A: eine Vorderansicht des Trägerelements gemäß Fig. 7;
- Fig. 8B: eine Schnittansicht entlang der Linie A-A gemäß Fig. 8B; und
- Fig. 8C: eine vergrößerte Ansicht im Ausschnitt A gemäß Fig. 8B.

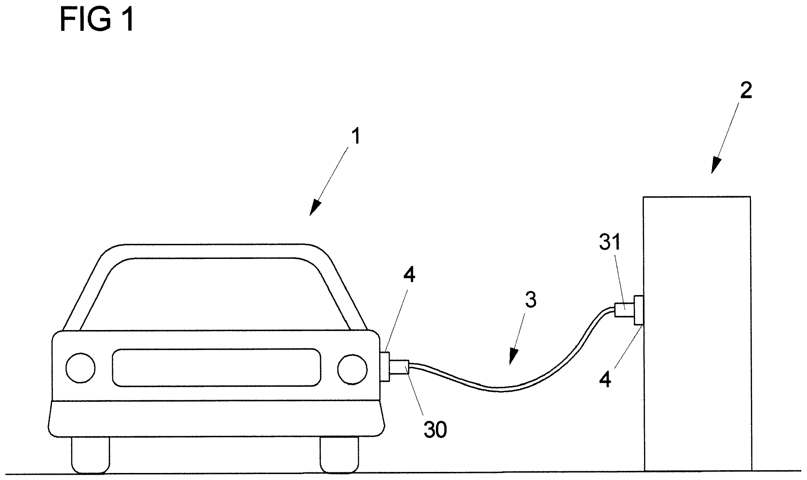

Fig. 1 zeigt in einer schematischen Ansicht ein Fahrzeug 1 in Form eines elektromotorisch angetriebenen Fahrzeugs (bezeichnet auch als Elektrofahrzeug). Das Elektrofahrzeug 1 verfügt über elektrisch aufladbare Batterien, über die ein Elektromotor zum Fortbewegen des Fahrzeugs 1 elektrisch versorgt werden kann.

Um die Batterien des Fahrzeugs 1 aufzuladen, kann das Fahrzeug 1 über ein Ladekabel 3 an eine Ladestation 2 angeschlossen werden. Das Ladekabel 3 kann hierzu mit einem Ladestecker 30 an einem Ende in ein zugeordnetes Gegensteckverbinderteil 4 in Form einer Ladebuchse des Fahrzeugs 1 eingesteckt werden und steht an seinem anderen Ende über einen anderen Ladestecker 31 mit einem Steckverbinderteil 4 in Form einer Ladebuchse an der Ladestation 2 in elektrischer Verbindung. Über das Ladekabel 3 werden Ladeströme mit vergleichsweise großer Stromstärke hin zum Fahrzeug 1 übertragen.

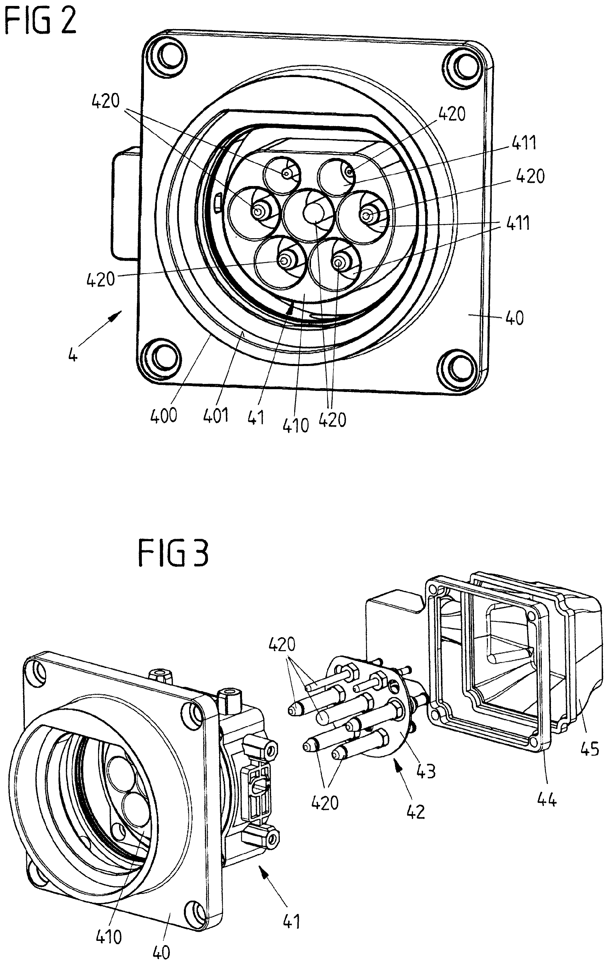

Fig. 2 bis 8A-8C zeigen ein Ausführungsbeispiel eines Steckverbinderteils 4, wie es beispielsweise an dem Ladekabel 3 gemäß Fig. 1 zum Einsatz kommen kann.

Bei dem in Fig. 2 in einer Gesamtschau dargestellten Steckverbinderteil 4 ist ein Steckereinsatz 41 an einem Gehäuseteil 40 angeordnet. Das Gehäuseteil 40 weist einen axial vorstehenden Bund 400 mit einer Öffnung 401 auf, in der der Steckereinsatz 41 derart angeordnet ist, dass ein Steckabschnitt 410 von außen zugänglich ist und steckend mit einem zugeordneten Gegensteckverbinderteil, beispielsweise einem Ladestecker, in Eingriff gebracht werden kann.

Der Steckabschnitt 410 weist eine Anzahl von axial erstreckten, eine Einsteckrichtung definierenden Öffnungen 411 auf, in denen jeweils ein Kontaktelement 420 angeordnet ist. Durch steckendes Inverbindungbringen mit dem zugeordneten Gegensteckverbinderteil werden die Kontaktelemente 420 in den Öffnungen 411 des Steckabschnitts 410 elektrisch kontaktiert mit zugeordneten Gegenkontaktelementen des Gegensteckverbinderteils, sodass eine elektrische Kontaktierung zwischen dem Steckverbinderteil 4 und dem Gegensteckverbinderteil hergestellt wird und beispielsweise Ladeströme für einen Ladevorgang übertragen werden können.

Die Kontaktelemente 420 sind, wie aus Fig. 3 ersichtlich, Bestandteil einer Kontaktbaugruppe 42, die als modulare Einheit an den Steckereinsatz 41 angesetzt werden kann. Das Gehäuse des Steckverbinderteils 4 wird durch weitere Gehäuseteile 44, 45, die mit dem (vorderen) Gehäuseteil 40 zu verbinden sind, komplettiert, sodass ein beispielsweise feuchtigkeitsdicht abgedichteter Steckverbinder geschaffen wird.

Jedes Kontaktelement 420 steht mit einem ersten Ende 420A von dem Trägerelement 435 vor und liegt in der ihm zugeordneten Öffnung 411 des Steckabschnitts 410 des Steckereinsatzes 41 ein. Mit einem abgewandten, zweiten Ende 420B ist beispielsweise eine Leitungsader eines elektrischen Kabels elektrisch kontaktiert.

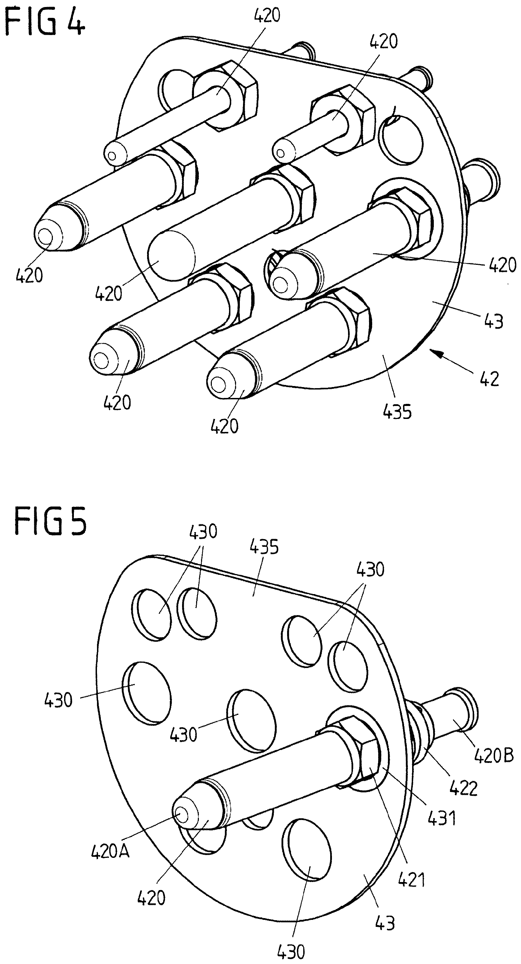

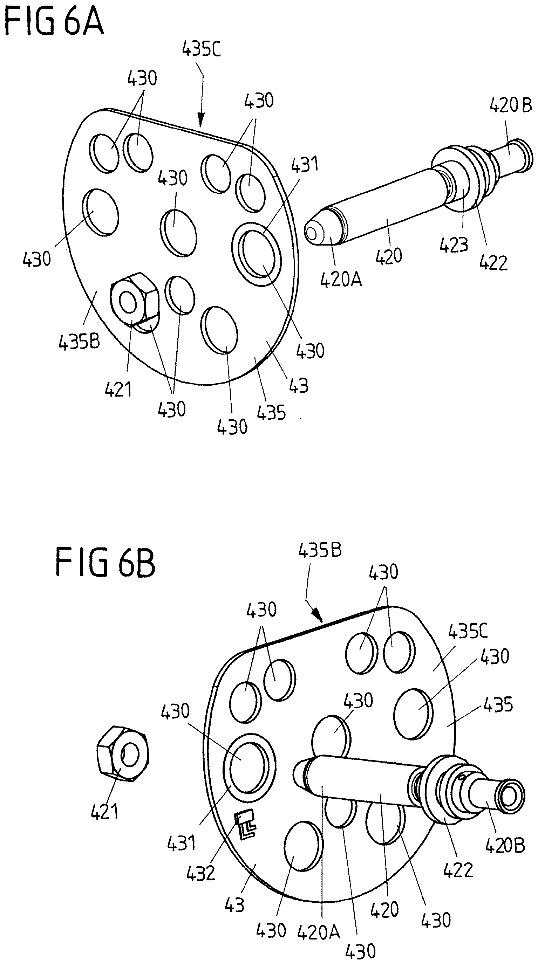

Wie aus den Ansichten gemäß Fig. 4 bis 6A, 6B ersichtlich, weist die Kontaktbaugruppe 42 eine Temperaturüberwachungseinrichtung 43 mit einem Trägerelement 435 auf. Das Trägerelement 435 ist beispielsweise durch eine Leiterplatte mit darin angeordneten Öffnungen 430 gebildet, wobei jedem Kontaktelement 420 eine Öffnung 430 zugeordnet ist und jedes Kontaktelemente 420 sich somit durch eine Öffnung 430 hindurch erstreckt.

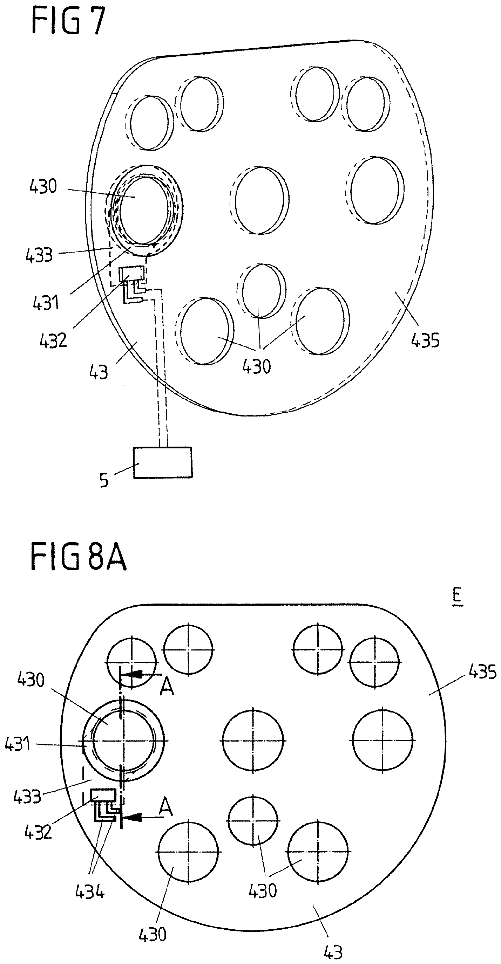

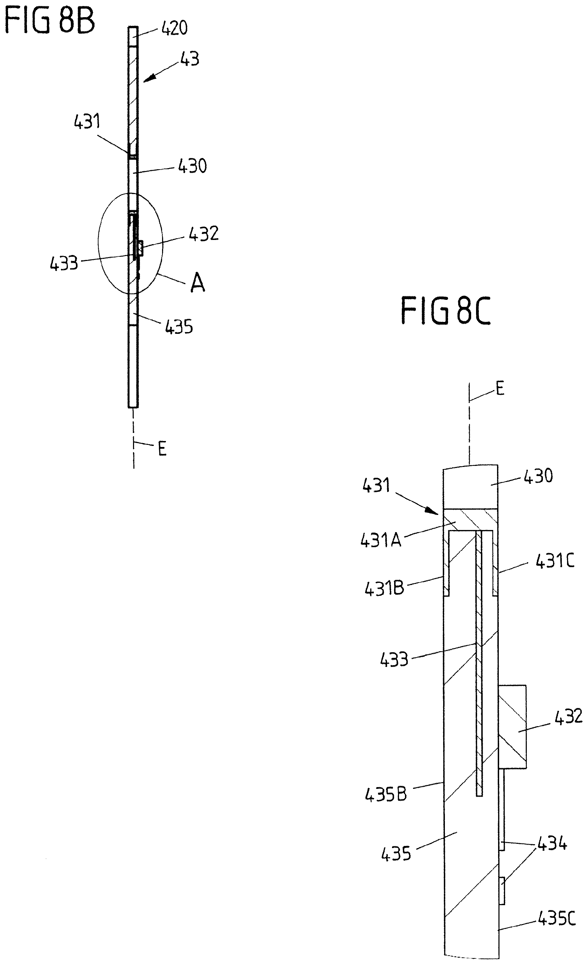

Das Trägerelement 435 erstreckt sich in einer Ebene E (siehe Fig. 7 und Fig. 8A-8C). Die Kontaktelemente 420 sind durch zylindrische Kontaktstifte ausgebildet und erstrecken sich senkrecht zu der Ebene E durch die Öffnungen 430 des Trägerelements 435 hindurch.

Die Temperaturüberwachungseinrichtung 43, deren Bestandteil das Trägerelement 435 ist, dient dazu, an zumindest solchen Kontaktelementen 420, die im Betrieb des Steckverbinderteils 4 zum Übertragen von großen Strömen dienen (den sogenannten Lastkontakte), zu detektieren, ob es zu einer übermäßigen, unzulässigen Erwärmung kommt. Erwärmt sich ein Kontaktelement 420 im Betrieb des Steckverbinderteils 4 über eine zulässige Temperaturschwelle hinaus, so kann dies eine Beschädigung oder gar vollständige Zerstörung des Steckverbinderteils 4 bewirken, was zu vermeiden ist.

Mit der Temperaturüberwachungseinrichtung 43 und einer mit dieser verbundenen, übergeordneten Steuereinrichtung 5 (siehe Fig. 7), die beispielsweise Bestandteil einer Ladestation 2 sein kann (siehe Fig. 1), kann somit in Abhängigkeit von einer gegebenenfalls auftretenden Erwärmung ein Stromfluss kontrolliert werden, um eine Erwärmung auf ein zulässiges Maß zu begrenzen und gegebenenfalls geeignete Gegenmaßnahmen, beispielsweise ein Herunterregeln eines Ladestroms oder ein Abschalten des Ladestroms, einzuleiten.

Um eine günstige Temperaturüberwachung an den Kontaktelementen 420 zu erreichen, weist das Trägerelement 435 an den Öffnungen 430 jeweils eine metallische Beschichtung zur Bereitstellung einer Kontaktfläche 431A-C in Form einer Durchkontaktierung 431 auf (veranschaulicht beispielsweise in Fig. 7 anhand einer einzelnen Öffnung 430). Wie sich insbesondere aus der vergrößerten Schnittansicht gemäß Fig. 8C ergibt, ist diese Durchkontaktierung 431 durch eine zylindrisch um die Öffnung 430 umlaufende Mantelfläche 431A und beidseits des Trägerelements 435 daran anschließende Kontaktierungsringe 431B, 431C gebildet. Die Mantelfläche 431A überdeckt den Rand der Öffnung 430 im Inneren, während die Kontaktierungsringe 431B, 431C das Trägerelement 435 an seinen Oberflächen beidseits ringförmig um die zugeordnete Öffnung 430 herum überdecken.

Jedes Kontaktelement 420 weist, wie beispielsweise aus Fig. 6A und 6B ersichtlich, einen zylindrischen Schaftabschnitt 423 auf, mit dem es in einer zugeordneten Öffnung 430 des Trägerelements 435 einliegt. Von dem Schaftabschnitt 432 steht ein Bund 422 in Form eines zylindrischen Ringbunds, der um den Schaftabschnitt 423 ringförmig umläuft, radial vor. Ist das Kontaktelement 420 in die ihm zugeordnete Öffnung 130 des Trägerelements 435 eingesetzt, so ist der vorstehende Bund 422 mit dem Kontaktierungsring 431C an der (ersten) Seite 435C des Trägerelements 435 in Anlage. Durch ein auf den Schaftabschnitt 423 aufgeschraubtes Schraubelement 421 wird das Kontaktelement 420 hierbei klemmend an dem Trägerelement 435 gehalten, wobei das Schraubelement 421 an einer der ersten Seite 435C gegenüberliegenden, zweiten Seite 435B des Trägerelements 435 zu liegen kommt und mit dem an dieser Seite 435B angeordneten Kontaktierungsring 431B der Durchkontaktierung 431 in Anlage ist, sodass über den Bund 422 einerseits und das Schraubelement 421 andererseits eine (zusätzliche) Kontaktierung des Kontaktelements 420 mit der Durchkontaktierung 431 des Trägerelements 435 hergestellt wird und das Trägerelement 435 klemmend zwischen dem Bund 422 und dem Schraubelement 421 gehalten ist.

Die Durchkontaktierung 431 an einer Öffnung 430 dient dazu, eine günstige thermische Kopplung des durch die Öffnung 430 erstreckten Kontaktelements 420 mit dem Trägerelement 435 herzustellen. Mit der Mantelfläche 431A ist hierbei, bei dem dargestellten Ausführungsbeispiel, im Inneren des Trägerelements 435 ein Kopplungsabschnitt 433 verbunden, der sich flächig im Inneren des Trägerelements 435 von der zugeordneten Öffnungen 430 weg erstreckt (siehe insbesondere Fig. 7 (gestrichelte Linien) und Fig. 8C). Dieser Kopplungsabschnitt 433 dient dazu, eine der Öffnung 430 zugeordnete Sensoreinrichtung 432 thermisch an die Durchkontaktierung 431 und somit das in der zugeordneten Öffnung 130 einliegende Kontaktelement 420 zu koppeln.

Wie insbesondere aus Fig. 7 und 8C ersichtlich, ist die Sensoreinrichtung 432 an der Oberfläche auf einer (ersten) Seite 435C des Trägerelements 435 angeordnet und befindet sich in Gegenüberlage zu dem im Inneren des Trägerelements 435 erstreckten Kopplungsabschnitt 433.

Dadurch, dass die Sensoreinrichtung 432 unter Zwischenlage von elektrisch isolierendem Material des Trägerelements 435 oberhalb des Kopplungsabschnitts 433 (betrachtet in senkrechter Richtung zur Ebene E) im Inneren des Trägerelements 435 angeordnet ist, ist die Sensoreinrichtung 432 elektrisch von der Durchkontaktierung 431 und somit von dem Kontaktelement 420 isoliert. Die Zwischenlage zwischen der Sensoreinrichtung 432 und dem Kopplungsabschnitt 433 kann hierbei vergleichsweise dünn sein und beispielsweise lediglich einige Zehntelmillimeter betragen, sodass eine günstige thermische Ankopplung der Sensoreinrichtung 432 an den Kopplungsabschnitt 433 und über den Kopplungsabschnitt 433 an die Durchkontaktierung 431 und somit das Kontaktelement 420 hergestellt wird.

Die Durchkontaktierung 431 ist genauso wie der Kopplungsabschnitt 433 aus einem metallischen Material, beispielsweise Kupfer, gefertigt. Erwärmt sich ein einer Öffnung 430 zugeordnetes Kontaktelemente 420, führt dies zu einer Erwärmung auch der Durchkontaktierung 431 der Öffnung 430 und somit des Kopplungsabschnitts 433, wobei die Erwärmung der Durchkontaktierung 431 und des Kopplungsabschnitts 433 ohne große zeitliche Verzögerung erfolgt.

Weil der Kopplungsabschnitt 433 in seiner Fläche groß gegenüber der Sensoreinrichtung 432 ausgebildet ist (siehe Fig. 7), erwärmt sich bei Erwärmung des Kopplungsabschnitts 433 das Trägerelement 435 in der Umgebung der zugeordneten Sensoreinrichtung 432 in zügiger Weise, sodass die Sensoreinrichtung 432 ohne große zeitliche Verzögerung auf eine Erwärmung an dem Kopplungsabschnitt 433 ansprechen kann. Eine Steuerung anhand von durch die Sensoreinrichtung 432 generierten Sensorsignalen kann somit mit günstigem Ansprechverhalten erfolgen.

Von der Sensoreinrichtung 432 führen Leiterbahnen 434 weg hin zu beispielsweise einer übergeordneten Steuereinrichtung 5 (siehe Fig. 7), die beispielsweise Bestandteil einer Ladestation 2 sein kann. An der Steuereinrichtung 5 können die durch die Sensoreinrichtung 432 generierten Sensorsignale ausgewertet werden, um in Abhängigkeit der Sensorsignale eine Steuerung von durch die Kontaktelemente 420 fließenden Ströme vorzunehmen.

Grundsätzlich kann eine Sensoreinrichtung 432 für jedes zu überwachende Kontaktelement 420 vorgesehen sein. Mittels der Sensoreinrichtungen 420 kann somit individuell die Temperatur an den einzelnen zu überwachenden Kontaktelementen 420 überwacht und eine Erwärmung detektiert werden.

Alternativ kann eine Sensoreinrichtung 432 auch einer Gruppe von mehreren zu überwachenden Kontaktelementen 420 zugeordnet sein. In diesem Fall erstrecken sich Kopplungsabschnitte 433 von den zu überwachenden Kontaktelementen 420 hin zu der überwachenden Sensoreinrichtung 432, sodass die Sensoreinrichtung 432 thermisch mit allen zu überwachenden Kontaktelementen 420 der Gruppe von Kontaktelementen 420 gekoppelt ist.

Das Trägerelement 435 kann beispielsweise als Leiterplatte ausgebildet sein. Das Trägerelement 435 kann hierbei beispielsweise aus einem elektrisch isolierenden Trägermaterial, beispielsweise einem Kunststoffmaterial, z.B. dem üblichen FR4, ausgebildet sein.

Der der Erfindung zugrunde liegende Gedanke ist nicht auf die vorangehend geschilderten Ausführungsbeispiele beschränkt, sondern lässt sich in ähnlicher Weise auch bei gänzlich anders gearteten Ausführungsformen verwirklichen.

Grundsätzlich ist ein Steckverbinderteil der hier beschriebenen Art nicht nur als Ladestecker oder Ladebuchse bei einer Ladeeinrichtung zum Aufladen eines Elektrofahrzeugs verwendbar, sondern kann in vielfältiger Weise an ganz unterschiedlichen Einrichtungen überall dort, wo eine Überwachung einer Erwärmung an einem Kontaktelement erforderlich ist, zum Einsatz kommen.

Ein Steckverbinderteil der hier beschriebenen Art kann grundsätzlich ein oder mehrere Kontaktelemente aufweisen. Hierbei können ein oder mehrere Sensoreinrichtungen zum Überwachen einer Erwärmung verwendet werden.

### Bezugszeichenliste

- 1: Fahrzeug
- 2: Ladestation
- 3: Ladekabel
- 30,31: Ladestecker
- 4: Steckverbinderteil
- 40: Gehäuseteil
- 400: Bund
- 401: Öffnung
- 41: Steckereinsatz
- 410: Steckabschnitt
- 411: Öffnung
- 42: Kontaktbaugruppe
- 420: Kontaktelement
- 420A, 420B: Ende
- 421: Schraubelement (Mutter)
- 422: Bund
- 423: Schaftabschnitt
- 43: Temperaturüberwachungseinrichtung
- 430: Öffnung
- 431: Durchkontaktierung
- 431A: Innere Mantelfläche
- 431B, 431C: Kontaktierungsring
- 432: Sensoreinrichtung
- 433: Kopplungsabschnitt
- 434: Leiterbahnen
- 435: Trägerelement
- 435B, 435C: Seite
- 44: Gehäuseteil
- 45: Gehäuseteil
- 5: Steuereinrichtung
- E: Ebene

## Patentansprüche

1. Steckverbinderteil (4) zum Verbinden mit einem Gegensteckverbinderteil (30, 31), mit
- einem Gehäuseteil (40),
- mindestens einem an dem Gehäuseteil (40) angeordneten, elektrischen Kontaktelement (420) zum Herstellen eines elektrischen Kontakts mit dem Gegensteckverbinderteil (30, 31), und
- einer Temperaturüberwachungseinrichtung (43) mit mindestens einer Sensoreinrichtung (432) zum Detektieren einer Erwärmung an dem mindestens einen Kontaktelement (420),
wobei die Temperaturüberwachungseinrichtung (43) ein flächig entlang einer Ebene (E) erstrecktes Trägerelement (435) mit mindestens einer Öffnung (430) und einer an der mindestens einen Öffnung (430) angeordnete Kontaktfläche (431A-C) aufweist, wobei das mindestens eine Kontaktelement (420) sich derart durch die mindestens eine Öffnung (430) hindurch erstreckt, dass das mindestens eine Kontaktelement (420) mit der Kontaktfläche (431A-C) in Anlage ist, und die mindestens eine Sensoreinrichtung (432) an dem Trägerelement (435) zur Detektion einer Erwärmung an dem mindestens einen Kontaktelement (420) angeordnet ist,
**dadurch gekennzeichnet, dass** ein metallischer Kopplungsabschnitt (433) mit der Kontaktfläche (431A-C) verbunden ist und sich ausgehend von der Kontaktfläche (431A-C) in dem Trägerelement (435) erstreckt, wobei der Kopplungsabschnitt (433) sich ausgehend von der Kontaktfläche (431A-C) parallel zur Ebene (E) im Inneren des Trägerelements (435) erstreckt, und wobei die mindestens eine Sensoreinrichtung (432) an einer flächig entlang der Ebene (E) erstreckten Seite (435C) des Trägerelements (435) angeordnet und von dem Kopplungsabschnitt (433) elektrisch isoliert ist, wobei der Kopplungsabschnitt (433), betrachtet in eine Richtung senkrecht zu der Ebene (E) des Trägerelements (435), unterhalb der mindestens einen Sensoreinrichtung (432) im Inneren des Trägerelements (435) angeordnet ist.

2. Steckverbinderteil (4) nach Anspruch 1, **dadurch gekennzeichnet, dass** die Kontaktfläche (431A-C) aus einem metallischen Material besteht, das sich an dem aus einem elektrisch isolierenden Material bestehenden Trägerelement (435) erstreckt.

3. Steckverbinderteil (4) nach Anspruch 1 oder 2, **dadurch gekennzeichnet, dass** das mindestens eine Kontaktelement (420) sich senkrecht zur Ebene (E) des Trägerelements (435) durch die mindestens eine Öffnung (430) hindurch erstreckt.

4. Steckverbinderteil (4) nach einem der Ansprüche 1 bis 3, **dadurch gekennzeichnet, dass** die mindestens eine Öffnung (430) sich kreiszylindrisch durch das Trägerelement (435) erstreckt und die Kontaktfläche (431A-C) die Öffnung (430) umgibt.

5. Steckverbinderteil (4) nach einem der vorangehenden Ansprüche, **dadurch gekennzeichnet, dass** die Kontaktfläche (431A-C) eine Mantelfläche (431A) aufweist, die durch eine die mindestens eine Öffnung (430) umgebende metallische Schicht gebildet ist.

6. Steckverbinderteil (4) nach einem der vorangehenden Ansprüche, **dadurch gekennzeichnet, dass** die Kontaktfläche (431A-C) zumindest einen metallischen Kontaktierungsring (431B, 431C) aufweist, der an einer Seite (435B, 435C) des flächig entlang der Ebene (E) erstreckten Trägerelements (435) angeordnet ist und um die mindestens eine Öffnung (430) umläuft.

7. Steckverbinderteil (4) nach einem der vorangehenden Ansprüche, **dadurch gekennzeichnet, dass** das mindestens eine Kontaktelement (420) mit einem zylindrischen Schaftabschnitt (423) in der mindestens einen Öffnung (430) einliegt und klemmend mit dem Trägerelement (435) verbunden ist.

8. Steckverbinderteil (4) nach Anspruch 7, **dadurch gekennzeichnet, dass** das mindestens eine Kontaktelement (420) einen radial von dem Schaftabschnitt (423) vorstehenden Bund (422) aufweist, der an einer ersten Seite (435C) des Trägerelements (435) angeordnet ist.

9. Steckverbinderteil (4) nach Anspruch 8, **dadurch gekennzeichnet, dass** das mindestens eine Kontaktelement (420) ein Schraubelement (421) aufweist, das auf den Schaftabschnitt (423) aufgeschraubt und an einer der ersten Seite (435C) gegenüberliegenden, zweiten Seite (435B) des Trägerelements (435) angeordnet ist, sodass das Trägerelement (435) klemmend zwischen dem Bund (422) und dem Schraubelement (421) gehalten ist.

10. Steckverbinderteil (4) nach einem der Ansprüche 1 bis 9, **dadurch gekennzeichnet, dass** das Steckverbinderteil (4) mehrere Kontaktelemente (420) und die Temperaturüberwachungseinrichtung (43) mehrere Sensoreinrichtungen (432) aufweist, wobei jede Sensoreinrichtung (432) genau einem Kontaktelement (420) zur Detektion einer Erwärmung an dem Kontaktelement (420) zugeordnet ist.

11. Steckverbinderteil (4) nach einem der Ansprüche 1 bis 9, **dadurch gekennzeichnet, dass** das Steckverbinderteil (4) mehrere Kontaktelemente (420) aufweist, wobei eine Sensoreinrichtung (432) einer Gruppe von mehreren der Kontaktelemente (420) zur Detektion einer Erwärmung an der Gruppe von Kontaktelementen (420) zugeordnet ist.

## Claims

1. Plug-in connector part (4) for connection to a mating plug-in connector part (30, 31), comprising
- a housing part (40),
- at least one electrical contact element (420), which is arranged on the housing part (40), for establishing electrical contact with the mating plug-in connector part (30, 31), and
- a temperature-monitoring device (43) comprising at least one sensor device (432) for detecting heating of the at least one contact element (420),
wherein the temperature-monitoring device (43) has a carrier element (435), which extends flat along a plane (E) and has at least one opening (430), and a contact area (431A-C), which is arranged at the at least one opening (430), wherein the at least one contact element (420) extends through the at least one opening (430) in such a way that the at least one contact element (420) is in contact with the contact area (431A-C), and the at least one sensor device (432) is arranged on the carrier element (435) for detecting heating of the at least one contact element (420),
**characterized in that** a metal coupling section (433) is connected to the contact area (431A-C) and extends in the carrier element (435) starting from the contact area (431A-C), wherein the coupling section (433) extends in the interior of the carrier element (435) parallel to the plane (E) starting from the contact area (431A-C), and wherein the at least one sensor device (432) is arranged on a side (435C) of the carrier element (435), which side extends flat along the plane (E), and is electrically insulated from the coupling section (433), wherein the coupling section (433), as viewed in a direction perpendicular to the plane (E) of the carrier element (435), is arranged in the interior of the carrier element (435) below the at least one sensor device (432).

2. Plug-in connector part (4) according to Claim 1, **characterized in that** the contact area (431A-C) is composed of a metal material which extends on the carrier element (435) which is composed of an electrically insulating material.

3. Plug-in connector part (4) according to Claim 1 or 2, **characterized in that** the at least one contact element (420) extends through the at least one opening (430) perpendicular to the plane (E) of the carrier element (435).

4. Plug-in connector part (4) according to one of Claims 1 to 3, **characterized in that** the at least one opening (430) extends through the carrier element (435) in a circular-cylindrical manner and the contact area (431A-C) surrounds the opening (430).

5. Plug-in connector part (4) according to one of the preceding claims, **characterized in that** the contact area (431A-C) has a lateral surface (431A) which is formed by a metal layer which surrounds the at least one opening (430).

6. Plug-in connector part (4) according to one of the preceding claims, **characterized in that** the contact area (431A-C) has at least one metal contact-making ring (431B, 431C) which is arranged on a side (435B, 435C) of the carrier element (435), which extends flat along the plane (E), and encircles the at least one opening (430).

7. Plug-in connector part (4) according to one of the preceding claims, **characterized in that** the at least one contact element (420), by way of a cylindrical shaft section (423), is situated in the at least one opening (430) and is connected to the carrier element (435) in a clamping manner.

8. Plug-in connector part (4) according to Claim 7, **characterized in that** the at least one contact element (420) has a collar (422) which protrudes from the shaft section (423) in a radial manner and is arranged on a first side (435C) of the carrier element (435).

9. Plug-in connector part (4) according to Claim 8, **characterized in that** the at least one contact element (420) has a screw element (421) which is screwed onto the shaft section (423) and is arranged on a second side (435B) of the carrier element (435), which second side is opposite the first side (435C), so that the carrier element (435) is held between the collar (422) and the screw element (421) in a clamping manner.

10. Plug-in connector part (4) according to one of Claims 1 to 9, **characterized in that** the plug-in connector part (4) has a plurality of contact elements (420) and the temperature-monitoring device (43) has a plurality of sensor devices (432), wherein each sensor device (432) is associated with precisely one contact element (420) for detecting heating of the contact element (420).

11. Plug-in connector part (4) according to one of Claims 1 to 9, **characterized in that** the plug-in connector part (4) has a plurality of contact elements (420), wherein one sensor device (432) is associated with one group of a plurality of the contact elements (420) for detecting heating of the group of contact elements (420).

## Revendications

1. Partie de connecteur à enfichage (4) destinée à être reliée à une partie de connecteur à enfichage homologue (30, 31), comprenant
- une partie de boîtier (40),
- au moins un élément de contact (420) électrique disposé au niveau de la partie de boîtier (40) et destiné à établir un contact électrique avec la partie de connecteur à enfichage homologue (30, 31), et
- un dispositif de surveillance de la température (43) comprenant au moins un dispositif de détection (432) destiné à détecter un réchauffement au niveau de l'au moins un élément de contact (420),
le dispositif de surveillance de la température (43) possédant un élément porteur (435) plat, qui s'étend le long d'un plan (E) et muni d'au moins une ouverture (430), ainsi qu'une surface de contact (431A-C) disposée au niveau de l'au moins une ouverture (430), l'au moins un élément de contact (420) s'étendant à travers l'au moins une ouverture (430) de telle sorte que l'au moins un élément de contact (420) est en appui avec la surface de contact (431A-C), et l'au moins un dispositif de détection (432) étant disposé au niveau de l'élément porteur (435) pour détecter un réchauffement au niveau de l'au moins un élément de contact (420),
**caractérisée en ce qu'**une portion de couplage (433) métallique est reliée à la surface de contact (431A-C) et s'étend depuis la surface de contact (431A-C) dans l'élément porteur (435), la portion de couplage (433) s'étendant à partir de la surface de contact (431A-C) parallèlement au plan (E) à l'intérieur de l'élément porteur (435), et l'au moins un dispositif de détection (432) étant disposé au niveau d'un côté (435C) de l'élément porteur (435) qui s'étend de manière plane le long du plan (E) et étant isolé électriquement de la portion de couplage (433), la portion de couplage (433), vue dans une direction perpendiculaire au plan (E) de l'élément porteur (435), étant disposée au-dessous de l'au moins un dispositif de détection (432) à l'intérieur de l'élément porteur (435).

2. Partie de connecteur à enfichage (4) selon la revendication 1, **caractérisée en ce que** la surface de contact (431A-C) se compose d'un matériau métallique qui s'étend au niveau de l'élément porteur (435) composé d'un matériau électriquement isolant.

3. Partie de connecteur à enfichage (4) selon la revendication 1 ou 2, **caractérisée en ce que** l'au moins un élément de contact (420) s'étend perpendiculairement au plan (E) de l'élément porteur (435) à travers l'au moins une ouverture (430).

4. Partie de connecteur à enfichage (4) selon l'une des revendications 1 à 3, **caractérisée en ce que** l'au moins une ouverture (430) s'étend de manière cylindrique circulaire à travers l'élément porteur (435) et la surface de contact (431A-C) entoure l'ouverture (430).

5. Partie de connecteur à enfichage (4) selon l'une des revendications précédentes, **caractérisée en ce que** la surface de contact (431A-C) possède une enveloppe (431A) qui est formée par une couche métallique qui entoure l'au moins l'ouverture (430).

6. Partie de connecteur à enfichage (4) selon l'une des revendications précédentes, **caractérisée en ce que** la surface de contact (431A-C) possède au moins un anneau de mise en contact métallique (431B, 431C) qui est disposé au niveau d'un côté (435B, 435C) de l'élément porteur (435) qui s'étend de manière plane le long du plan (E) et qui est périphérique autour de l'au moins une ouverture (430).

7. Partie de connecteur à enfichage (4) selon l'une des revendications précédentes, **caractérisée en ce que** l'au moins un élément de contact (420) est logé par une portion de tige (423) cylindrique dans l'au moins une ouverture (430) et est relié avec serrage à l'élément porteur (435).

8. Partie de connecteur à enfichage (4) selon la revendication 7, **caractérisée en ce que** l'au moins un élément de contact (420) possède un collet (422) faisant saillie dans le sens radial depuis la portion de tige cylindrique (423) et qui est disposé au niveau d'un premier côté (435C) de l'élément porteur (435).

9. Partie de connecteur à enfichage (4) selon la revendication 8, **caractérisée en ce que** l'au moins un élément de contact (420) possède un élément à visser (421) qui est vissé sur la portion de tige (423) et est disposé au niveau d'un deuxième côté (435B) de l'élément porteur (435), à l'opposé du premier côté (435C), de sorte que l'élément porteur (435) est maintenu par serrage entre le collet (422) et l'élément à visser (421).

10. Partie de connecteur à enfichage (4) selon l'une des revendications 1 à 9, **caractérisée en ce que** la partie de connecteur à enfichage (4) possède plusieurs éléments de contact (420) et le dispositif de surveillance de la température (43) plusieurs dispositifs de détection (432), chaque dispositif de détection (432) étant précisément associé à un élément de contact (420) en vue de la détection d'un réchauffement au niveau de l'élément de contact (420).

11. Partie de connecteur à enfichage (4) selon l'une des revendications 1 à 9, **caractérisée en ce que** la partie de connecteur à enfichage (4) possède plusieurs éléments de contact (420), un dispositif de détection (432) étant associé à un groupe de plusieurs éléments de contact (420) en vue de la détection d'un réchauffement au niveau du groupe d'éléments de contact (420).
